# NOUVEAU FASCICULE DE BREVET EUROPEEN

(11) **EP 2 567 270 B2**
(45) Date de publication et mention de la décision concernant l'opposition: **17.05.2023**
(45) Mention de la délivrance du brevet: 12.08.2015
(21) Numéro de dépôt: 11722750.4
(22) Date de dépôt: 05.05.2011
(51) Int. Cl.: B42D 25/00, B42D 15/00, G02B 5/18

(54) **COMPOSANT OPTIQUE D'AUTHENTIFICATION ET PROCEDE DE FABRICATION DUDIT COMPOSANT**
KOMPONENTE FÜR OPTISCHE AUTHENTIFIZIERUNG UND VERFAHREN ZUR HERSTELLUNG DIESER KOMPONENTEN
OPTICAL AUTHENTICATION COMPONENT AND METHOD OF FABRICATING SAID COMPONENT

(30) Priorité: 07.05.2010 FR 1053582
(43) Date de publication de la demande: 13.03.2013
(73) Titulaire: SURYS, 77607 Marne-la-Vallée Cedex 3 (FR)
(72) Inventeur: NOIZET, Alexandre, 77600 Bussy-Saint-Georges (FR); PETITON, Valery, 77440 Vendrest (FR)
(74) Mandataire: Osha Liang
(86) Numéro de dépôt international: PCT/EP2011/057204
(87) Numéro de publication internationale: WO 2011/138394

(56) Documents cités:
- EP-A1- 2 077 459
- EP-A2- 2 161 598
- WO-A1-97/21121
- WO-A2-03/084766
- AU-A1- 2005 200 844
- CH-A5- 691 750
- US-A- 4 856 857
- US-A- 5 105 306
- US-A1- 2006 251 863
- US-A1- 2007 053 028
- US-A1- 2009 122 412
- US-B2- 7 102 823

## Description

### DOMAINE DE L'INVENTION

La présente invention concerne le domaine du marquage de sécurité. Plus particulièrement, elle se rapporte à un composant optique pour vérifier l'authenticité d'un produit ou d'un document et à un procédé de fabrication d'un tel composant.

### ETAT DE L'ART

L'oeil humain est principalement sensible à trois paramètres : la couleur, le contraste et le relief. Il existe de nombreux types de composants de marquage de sécurité et les comportements optiques de ces composants sont variés.

Parmi les composants qui présentent un comportement optique remarquable, on connaît un composant de sécurité comprenant un filtre, coloré soustractif à diffraction tel que décrit dans le brevet français FR2509873. La figure 1 représente une vue selon un plan de coupe d'un filtré coloré 100 soustractif à diffraction selon l'art antérieur. Le filtre 100 comprend un film de polyester 101 revêtu d'une couche de vernis d'estampage 102 embossé par estampage de façon connue pour la réalisation de structures diffringentes destinées à l'authentification de documents. La surface estampée présente une forme de réseau périodique dont la profondeur et la période sont respectivement de l'ordre de la centaine à quelques centaines de nanomètres. La surface estampée est revêtue par dépôt sous vide d'une couche d'un matériau diélectrique transparent à haut indice optique 103 puis par enduction d'une couche 104 d'indice optique bas proche de l'indice optique du vernis d'estampage. De cette manière, les variations d'indice entre la couche mince 103 déposée et les matériaux de support 102 et d'encapsulation 104 sont fortes. L'ensemble ainsi préparé peut être ensuite revêtu d'un film adhésif 105 déposé par exemple par enduction ou par laminage pour faciliter le dépôt sur le document à protéger.

Un tel composant se comporte comme un guide d'onde structuré permettant d'exciter des résonances de modes guidés à des longueurs d'onde différentes en fonction de la polarisation. En réflexion, un tel composant se comporte ainsi comme un miroir coloré dont la couleur varie en fonction de la direction d'observation. Les caractéristiques de couleur du composant 100 pour chaque angle d'une lumière réfléchie 108 dépendent notamment de la direction de la lumière incidente 107 et des paramètres physiques du composant comme la période des éléments diffractifs 106, l'épaisseur de la couche mince 103 et les indices optiques des matériaux composant le filtre. Un tel composant produit un effet coloré variable, en fonction des directions d'éclairage et d'observation. Le composant présente ainsi une première couleur selon une certaine direction d'observation et une deuxième couleur selon une seconde direction d'observation perpendiculaire à la première direction obtenue par une rotation azimutale du composant lorsqu'on se place à angles d'incidence et de réflexion donnés. Un tel composant de sécurité présente l'avantage de bien fonctionner dans des conditions d'éclairage diffus et est généralement considéré comme étant très résistant à la contrefaçon.

Cependant l'oeil humain est aussi sensible au paramètre du relief et un tel composant ne permet de visualiser que des images à deux dimensions.

Le document WO 97/21121 décrit une structure diffractive, notamment pour les films de sécurité, comprenant un ensemble de facettes inclinées sur lesquelles sont formés des réseaux de diffractions. D1 vise à fabriquer une structure diffractive qui permettre de produire des effets colorés dans une large bande d'angles de vue et d'illumination. Cela est rendu possible du fait que les réseaux de diffraction sont portés par des facettes inclinées identiques formant les faces de structures polyèdres. La structure en facettes telle que décrite permet de réduire la dépendance des effets de diffraction en fonction des rotations du composant dans son plan ou en dehors de son plan.

La présente invention présente un composant optique qui offre notamment les avantages d'un filtre coloré soustractif, notamment la coloration variable en fonction de la direction d'observation, et présente en plus un effet visuel de relief en trois dimensions. Ceci permet notamment d'apporter un deuxième critère sélectif de perception visuelle et de permettre une meilleure reconnaissance et mémorisation d'une image par un observateur.

### RESUME DE L'INVENTION

Selon un premier aspect, l'invention concerne un composant optique d'authentification visible en réflexion tel que décrit dans la revendication 1.

Selon un exemple, le premier motif est calculé pour former lors de l'observation du composant pour le contrôle d'authenticité un signe graphique reconnaissable.

Selon un exemple, une différence d'indice Δn entre les indices n₁ et n₀ est supérieure à environ 0,5.

Selon un exemple, le matériau d'indice n₁ comprend au moins l'un des matériaux du groupe consistant en : sulfure de zinc, dioxyde de titane.

Selon un exemple, une profondeur du premier motif est comprise entre 0.5 et 7 microns et une profondeur du deuxième motif est comprise entre 50 et 300 nanomètres.

Selon un exemple, l'écart minimum entre plus de 90% des paires de lignes de crêtes adjacentes du premier motif est au moins deux fois supérieur au pas du second motif.

Selon un exemple, le support et le matériau formant la couche mince sont transparents.

Selon un exemple, le composant comprend en outre :
- une couche de polymère déposée sur le support,
- une couche opaque déposée sur la couche d'encapsulation (50),
- une couche de colle déposée sur la couche opaque pour adhérer à la surface d'un document.

Selon un exemple, une section du premier motif présente une forme à niveaux multiples.

Selon un second aspect, l'invention concerne un procédé de fabrication d'un composant optique d'authentification tel que décrit dans la revendication 10.

Selon un exemple, le premier motif est calculé à partir d'une image dudit objet codant le relief sur plusieurs niveaux de gris.

Selon un exemple, la formation de la structure gravée sur le support comprend la réalisation d'un master optique comprenant:
- une première insolation d'une résine photosensible adaptée pour former après développement le premier motif sur ladite résine,
- une deuxième insolation de la résine adaptée pour former après développement le deuxième motif sur ladite résine,
- le développement de la résine en utilisant une solution chimique déterminée.

### BREVE DESCRIPTION DES FIGURES

D'autres caractéristiques et avantages de l'invention apparaîtront à la lecture de la description qui suit, illustrée par les figures sur lesquelles :

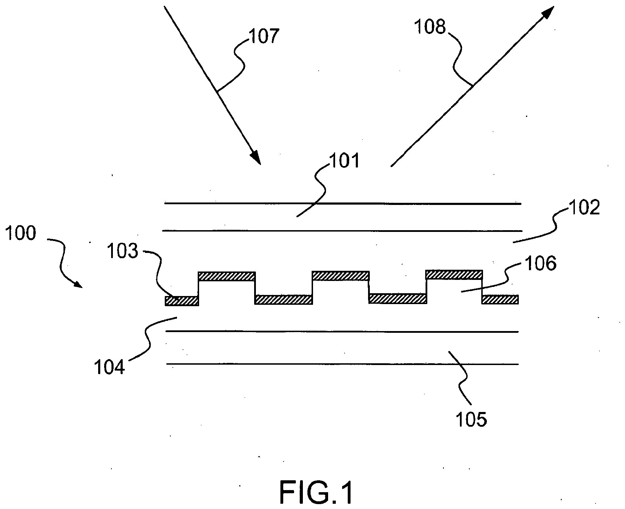

La figure 1, déjà décrite, illustre une vue selon un plan de coupe d'un composant optique selon l'art antérieur.
La figure 2 illustre schématiquement les étapes d'un procédé de fabrication d'un composant optique d'authentification selon l'invention.
La figure 3 illustre plus en détail les étapes de formation d'une structure gravée selon un exemple.
Les figures 4A et 4B illustrent respectivement une vue en perspective et une vue en coupe d'un objet dont un maillage est représenté pour la détermination de la forme d'un premier motif apte à simuler l'image en relief de l'objet selon un mode de réalisation de la présente invention.
Les figures 5A et 5B illustrent deux exemples de premiers motifs obtenus à partir du maillage de l'objet représenté sur les figures 4A et 4B dans des modes de réalisation de la présente invention.
Les figures 6A et 6B illustrent la détermination du premier motif selon un autre mode réalisation de l'invention.
La figure 7 illustre une approximation de la forme d'un premier motif dans un mode de réalisation de la présente invention.
Les figures 8A et 8B représentent respectivement une vue en coupe et un agrandissement d'une vue en coupe d'un composant optique d'authentification selon un mode de réalisation de l'invention.
La figure 9 illustre un composant optique d'authentification selon un mode de réalisation de l'invention apposé sur un document ;
Les figures 10A à 10C illustrent selon un exemple respectivement une vue de dessus d'un composant selon l'invention (figure 10A) et deux images (figures 10B, 10C) prises au microscope à force atomique de la structure dudit composant respectivement à deux résolutions différentes.

### DESCRIPTION DETAILLEE

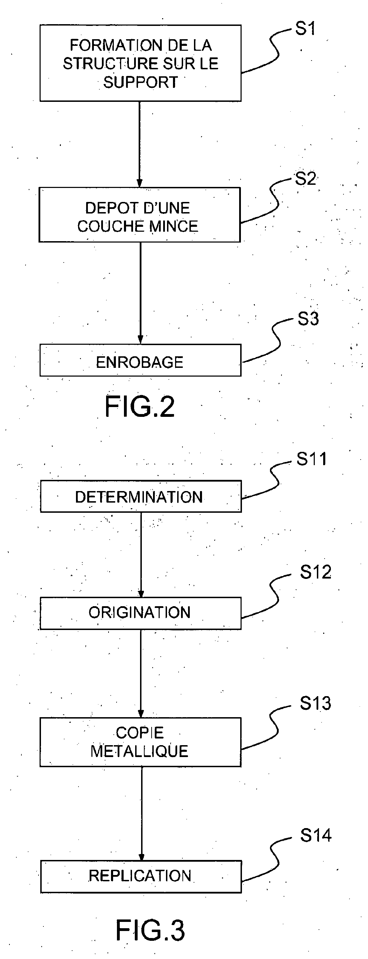

La figure 2 illustre schématiquement les étapes d'un procédé de fabrication d'un composant optique d'authentification selon un mode de réalisation de la présente invention.

Le procédé tel que décrit dans la figure 2 comprend généralement une première étape S1 de formation d'une structure gravée sur un support composé d'un matériau d'indice n₀. Le support est par exemple un vernis thermo formable transparent et la structure gravée peut être formée sur le support par embossage. Le matériau du support a typiquement un indice de réfraction n₀ de l'ordre de 1,5. Comme cela sera décrit plus en détails par la suite, la structure gravée présente un premier motif modulé par un second motif. Le premier motif de la structure gravée a une forme de bas relief déterminée pour simuler une image en relief. Le second motif de la structure gravée a une forme de réseau périodique déterminée pour produire, après dépôt d'une couche mince d'un matériau d'indice optique n₁ présentant une différence d'indice Δn avec l'indice n₀ et encapsulation dans un matériau d'indice n₂ proche de n₀, une première couleur de réflexion selon une première orientation et une deuxième couleur de réflexion selon une deuxième orientation obtenue par une rotation azimutale du composant. Ainsi, pour un angle d'incidence et de réflexion donné, le composant change de couleur quand il subit une rotation selon un axe perpendiculaire à un plan d'extension du composant. La modulation du premier motif par le deuxième motif peut être une superposition du premier et du deuxième motif. Le second motif est un réseau périodique suivant une dimension avec une section rectangulaire ou sinusoïdale. Un pas et une profondeur du réseau périodique formant le deuxième motif sont respectivement compris entre 250 et 400 nanomètres et entre 50 et 300 nanomètres. On peut alors observer, dans le cas d'un réseau suivant une dimension, un changement de couleur pour un angle de rotation azimutale de sensiblement 90 degrés.

Le procédé comprend ensuite une étape S2 de dépôt de la couche mince du matériau d'indice optique n1 présentant une différence d'indice Δn avec l'indice du matériau formant le support. La différence d'indice est choisie supérieure à 0,5. Par exemple, le support présente un indice d'environ 1,5 et la couche mince est formée d'un matériau haut indice, par exemple du sulfure de Zinc (ZnS) d'indice environ 2,2 ou du dioxyde de titane (TiO2) d'indice environ 2,5. La couche mince présente une épaisseur comprise entre 50 et 150 nm.

Les dimensions du pas du réseau et de sa profondeur, ainsi que l'épaisseur de la couche mince sont adaptées de façon connue en fonction des couleurs de réflexion recherchées pour le composant. Ainsi par exemple, pour des dimensions plus faibles du pas du réseau (inférieures à 300 nm), on obtiendra des couleurs tendant vers le bleu/vert, alors qu'avec des pas plus élevés, on obtiendra des couleurs tendant vers le vert/rouge.

Par la suite, le procédé comprend une étape S3 d'encapsulation consistant par exemple à enduire la structure revêtue de ladite couche mince du matériau d'indice n₂ proche de n₀. Dans un autre mode de réalisation, on peut réaliser le composant en utilisant un support et une couche d'encapsulation d'indice proches et supérieurs à l'indice de la couche mince de matériau intermédiaire (Δn<0).

La figure 3 représente schématiquement les étapes de formation de la structure gravée sur le support selon un mode de réalisation de l'invention.

Le procédé comprend généralement une première étape S11 de détermination de la forme de la structure destinée à être à gravée sur un support final. Dans la description qui suit, le terme support final est utilisé pour faire référence au matériau du composant optique sur lequel la structure gravée est formée. Le support final comprend par exemple le matériau d'indice n₀.

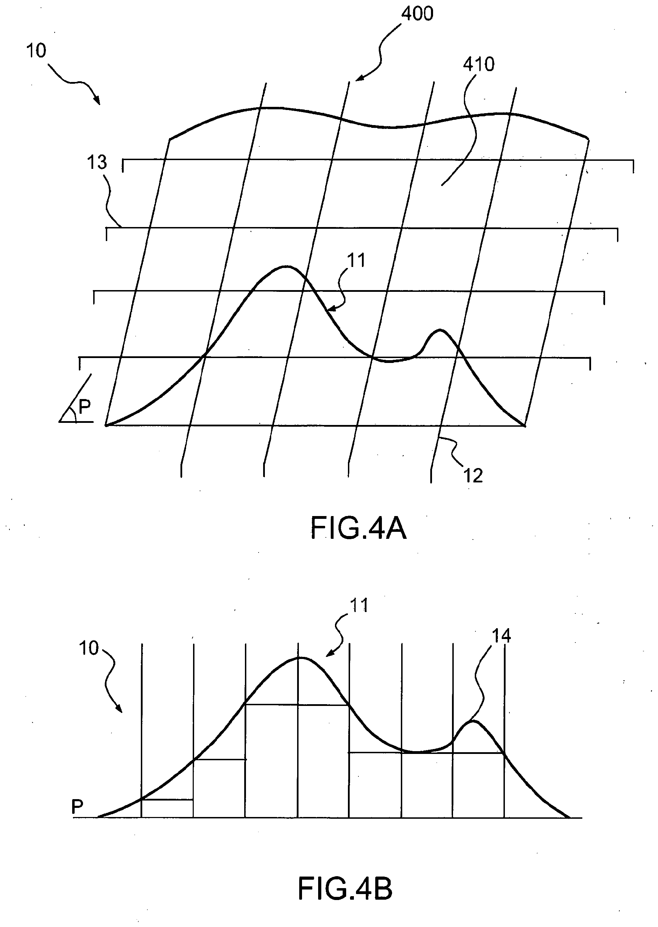

Comme expliqué précédemment, la structure formée sur le support final présente un premier motif modulé par un second motif. Le premier motif de la structure peut être déterminé pour simuler les propriétés de réflexion d'une surface d'un objet. Par exemple, le premier motif forme une surface bas relief qui résulte d'une translation par zone de la surface de l'objet dont on cherche à simuler les propriétés de réflexion. Pour la détermination de la forme du premier motif, on peut se référer à la méthode de formation des lentilles de Fresnel. Plus de détails sur l'étape de détermination du premier motif sont illustrés dans la description relative aux figures 4A-B, 5A-B et 6A-B. Le premier motif peut par exemple être déterminé pour reproduire un signe graphique reconnaissable en relief ou une texture présentant un relief reconnaissable. Le premier motif peut être déterminé à partir de l'objet dont l'effet de relief est destiné à être reproduit ou à partir d'une représentation de l'objet qui incorpore l'information de relief. Par exemple, le premier motif peut être déterminé à partir d'une image de l'objet en relief codant l'information de relief sur des niveaux de gris. Le deuxième motif de ladite structure a une forme de réseau périodique à une dimension, tel que décrit précédemment.

Le procédé tel que décrit sur la figure 3 comprend par la suite une deuxième étape d'origination S12, qui consiste à créer un exemplaire original, aussi appelé master optique. Le master optique est par exemple un support optique sur lequel ladite structure est formée.

Le master optique peut être formé par des méthodes de lithographie électronique ou optique connues de l'état de l'art.

Par exemple, selon un premier mode de réalisation, le master optique est réalisé par gravure d'une résine électro-sensible en utilisant un faisceau d'électrons. Le relief peut ainsi être obtenu sur la résine électro-sensible en faisant varier directement le flux du faisceau d'électrons sur la zone que l'on veut impressionner. Dans cet exemple de réalisation, la structure présentant le premier motif modulé par le deuxième motif peut être gravée en une seule étape, selon un procédé en série.

Selon un autre mode de réalisation, une technique de lithographie optique (ou photolithographie) peut être utilisée. Le master optique est dans cet exemple une plaque de résine photosensible et l'étape d'origination est effectuée par une ou plusieurs insolations de la plaque par projections de masques, de type masque de phase et/ou de type masque d'amplitude, suivies d'un développement dans une solution chimique appropriée. Par exemple, une première insolation est réalisée par projection de masques d'amplitude dont les coefficients de transmission sont adaptés pour que soit formé, après développement, un relief correspondant au premier motif. Ensuite, une deuxième insolation globale est réalisée en utilisant un deuxième masque de type masque de phase. Selon des méthodes connues de l'homme de l'art, les variations de phase de ce masque peuvent être préalablement calculées pour former après développement, un relief correspondant au deuxième motif. L'ordre de formation des motifs est quelconque et peut être modifié. Par la suite, l'étape de développement est menée. De cette manière, un master optique comprenant une structure qui résulte de la superposition du premier motif et du deuxième motif est obtenue après développement.

Le master optique résultant de la superposition des premier et deuxième motifs comprend après développement un nano-relief pour pouvoir produire l'effet de miroir coloré dont la couleur varie en fonction de la direction d'observation superposée à un microrelief qui reproduit l'effet visuel de relief de l'objet déterminé. Dans un mode de réalisation, l'effet de relief correspond à une texture pouvant présenter un caractère aléatoire ou répétitif.

Le procédé tel que décrit sur la figure 3 comprend par la suite une étape S13 de copie métallique du master optique par exemple par galvanoplastie. L'étape de copie métallique permet de copier la forme du master optique sur un support métallique plus résistant pour obtenir un master métallique sur lequel ladite structure est formée. Le master optique peut ainsi être recouvert d'une plaque de métal, par exemple du Nickel, qui reproduit la structure formée sur le master optique.

Une étape de duplication matricielle (non représentée sur la figure) du master métallique est généralement effectuée pour obtenir un outil de production de grande taille adapté pour répliquer la structure en quantité industrielle. L'étape de duplication matricielle consiste par exemple à reproduire plusieurs fois le master métallique sur une surface métallique de grande taille pour obtenir une matrice métallique.

Par la suite, dans une étape de réplication S14, le master métallique, ou la matrice métallique le cas échéant, est répliqué pour former la structure sur le support final. Dans un mode de réalisation, le master métallique peut être par exemple ajusté sur un cylindre chauffé pour former par embossage la structure sur le support final. Dans le mode de réalisation où la réplication est effectuée par embossage, le support final peut comprendre un support plastique recouvert d'un vernis d'embossage dont l'indice de réfraction n₀ est de l'ordre de 1,5. Dans un autre mode de réalisation, l'étape de réplication peut être réalisée en utilisant une technique de réticulation ultraviolet (UV). Dans le mode de réalisation où la réplication est effectuée par réticulation UV, le support final peut comprendre un support plastique recouvert d'un vernis réticulable par flash ultraviolet dont l'indice de réfraction n₀ est de l'ordre de 1,5. La réplication par réticulation UV permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication.

Les figures 4A-B, 5A-B et 6A-B illustrent plus particulièrement la détermination de la forme du premier motif pour simuler une image en relief selon des modes de réalisation de la présente invention.

Plus précisément, la figure 4A représente une vue en perspective cavalière d'un objet 10 dont on cherche à simuler l'effet de relief. La figure 4B illustre une coupe transverse de l'objet 10 pour faciliter la lisibilité.

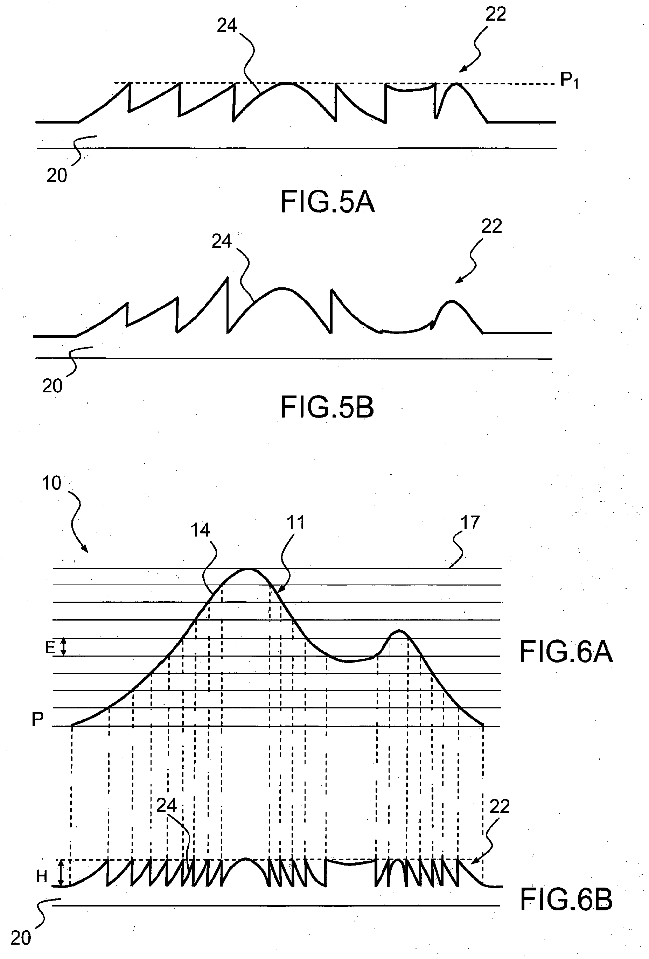

La forme du premier motif 22 (figures 5A et suivantes) peut être obtenue en définissant dans une première étape un maillage 400 de l'objet 10 à pas constant. On peut définir un plan P de support de l'objet 10 tel qu'illustré sur la figure 4A. Le maillage 400 de l'objet 10 peut être formé d'un ou plusieurs premiers plans élémentaires 12 perpendiculaires au plan P et parallèles entre eux et d'un ou plusieurs deuxièmes plans élémentaires 13 perpendiculaires au plan P et aux premiers plans élémentaires 12. Dans la représentation de la figure 4B, le plan de coupe 11 peut être un desdits deuxièmes plans élémentaires. Dans un mode de réalisation, le maillage peut être de forme différente, profiter des symétries de l'objet 10 et/ou ne pas être régulier. Le maillage 400 définit une partition d'une surface externe de l'objet 10. Pour chaque zone 410 (aussi appelée maille) du maillage 400, une surface élémentaire 14 résultant du maillage de la surface externe de l'objet peut être définie. Le maillage 400 peut être choisi de manière à ce que les surfaces élémentaires 14 soient assimilables à des plans inclinés. Par exemple, le maillage peut former des sections carrées de 10 à 25 micromètres de côté. La forme du premier motif 22 peut être obtenue en translatant dans chaque maille les surfaces élémentaires 14 pour obtenir un premier motif en forme de bas relief d'épaisseur réduite dont les facettes 24 (Figure 5A et suivantes) reproduisent la forme des surfaces élémentaires 14.

Dans le mode de réalisation illustré sur la figure 5A, les translations dans chaque maille sont adaptées pour que les lignes supérieures des facettes 24 du premier motif se situent dans un plan P1 à une hauteur déterminée du plan du support 20. Un tel mode de réalisation est avantageux dans le cadre d'une réplication par embossage car il limite les variations d'épaisseur du premier motif.

Dans un autre mode de réalisation illustré sur la figure 5B, les translations dans chaque maille sont adaptées pour minimiser le volume des facettes 24 du premier motif résultant. Un tel mode de réalisation est avantageux dans le cadre d'une réplication du support optique par réticulation UV car la réticulation UV est sensible aux faibles variations d'épaisseur.

Dans un autre mode de réalisation illustré sur les figures 6A et 6B, on peut déterminer la forme du premier motif 22 de manière à limiter l'épaisseur H du premier motif 22 à une valeur prédéterminée. Le maillage est alors effectué à niveau constant sous la forme d'un tranchage. Les figures 6A et 6B illustrent une vue en coupe d'un tel maillage de l'objet 10 qui permet d'adapter l'épaisseur H du premier motif 22 obtenu en agençant un espacement E constant entre des plans de maillage 17 parallèles entre eux et au plan P de support de l'objet 10. L'épaisseur du premier motif 22 résultant peut ainsi être constante. Comme précédemment, la forme du premier motif 22 peut être obtenue en translatant les surfaces élémentaires 14 pour obtenir un premier motif en forme de bas relief d'épaisseur réduite dont les facettes 24 reproduisent la forme, des surfaces élémentaires 14. Un tel mode de réalisation est avantageux dans le cadre d'une réplication par embossage car il limite les variations d'épaisseur du premier motif résultant.

Ainsi, de manière générale, la surface globale du premier motif 22 obtenu n'est pas lisse mais se compose de plusieurs facettes 24 séparées par des discontinuités. Les lignes supérieures des facettes 24 du premier motif forment une alternance de lignes de crêtes, majoritairement fermées. La hauteur des facettes du premier motif est généralement comprise entre 0.5 et 7 microns.

La formation du premier motif dont la forme a été déterminée peut être effectuée sur le support 20 selon l'une des méthodes décrites précédemment. Ainsi, la sensation de relief obtenue par l'observation du premier motif 22 sur le support est très proche de la sensation de relief obtenue par l'observation de l'objet 10. Ceci permet notamment d'obtenir un effet de relief à partir d'une surface quasiment plane. L'épaisseur résultante du premier motif est typiquement inférieure à quelques micromètres, avantageusement inférieure à un micromètre.

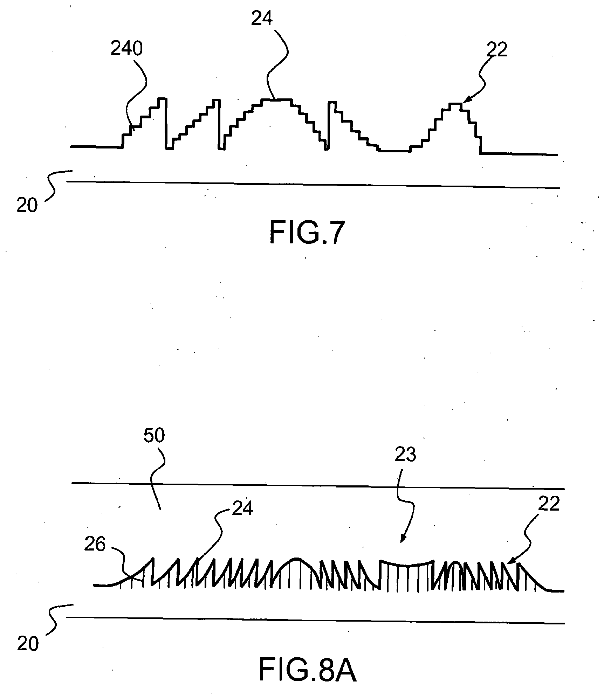

La figure 7 illustre un mode de réalisation alternatif dans lequel la forme des facettes du premier motif 22 sur le support 20 est approchée par des surfaces à deux ou plusieurs niveaux 240. Le pas de chaque niveau est typiquement de l'ordre de 500 nanomètres à 2 micromètres. Par rapport à un profil continu, les surfaces à multi niveaux ou même les surfaces binaires (à deux niveaux) vont produire un effet plus ou moins dégradé mais vont être plus simples à réaliser. Il s'agira ainsi de trouver le bon compromis en fonction de l'effet recherché.

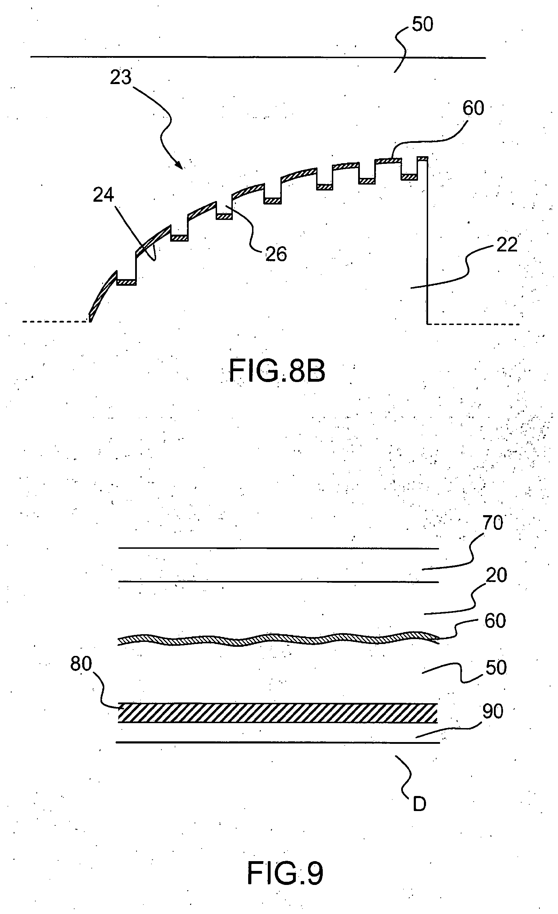

Les figures 8A et 8B illustrent des vues en coupe d'un composant optique selon un mode de réalisation de la présente invention.

Le composant optique comprend une structure gravée 23 qui peut résulter de la réplication par embossage sur un support 20 (ou support final) d'un master métallique sur lequel ladite structure est formée selon la méthode précédemment décrite. La structure gravée 23 présente le premier motif 22 dont la forme peut être déterminée selon la méthode décrite. Le premier motif 22 forme un bas relief dont les facettes 24 répliquent la forme des surfaces élémentaires 14 issues du maillage de l'objet. Le premier motif est modulé par le deuxième motif. Le deuxième motif forme un réseau périodique 26 superposé au premier motif comme cela a été précédemment décrit. Dans un mode de réalisation, un composant selon l'invention peut comprendre plusieurs structures gravées à différentes positions du support et formées selon la méthode décrite plus haut. Avantageusement, l'écart minimum entre plus de 90% des paires de lignes de crêtes adjacentes du premier motif est au moins deux fois supérieur au pas du second motif.

La figure 8B est un agrandissement d'une portion de la structure gravée 23. Les éléments diffractifs du deuxième motif 26 sont superposés sur la facette 24 du premier motif 22. La structure gravée 23 est recouverte de la couche mince 60 de matériau d'indice fort n₁ typiquement de l'ordre de 2,2, par exemple du sulfure de zinc (ZnS). La couche mince 60 peut être déposée par un procédé de dépôt sous vide. La structure gravée 23 recouverte de la couche mince 60 est finalement enduite par la couche 50 de matériau d'indice n₂ proche de l'indice du matériau formant le support 20. Le composant ainsi obtenu présente le comportement d'un filtre coloré soustractif à diffraction tout en permettant de recréer l'effet visuel de relief d'un objet. Un tel composant permet une meilleure reconnaissance et mémorisation par un observateur. De plus, l'onde réfléchie par le composant optique est polarisée linéairement. Ceci permet un contrôle de l'authenticité très simple par l'utilisation de filtres polarisant linéaires. En outre, la superposition des facettes du premier motif et des éléments diffractifs du second motif améliore la visibilité du deuxième motif en lumière ponctuelle.

La figure 9 illustre un composant optique tel selon l'invention comprenant en plus une couche de polymère 70 déposée sur le support 20, une couche opaque 80 déposée sur la couche d'encapsulation 50, une couche de colle 90 déposée sur la couche opaque pour adhérer à la surface d'un document D. La couche opaque 80 favorise les effets de contraste et peut être omise. La couche de colle 90 permet l'adhésion au document D et la couche de polymère permet de manipuler le composant facilement. Le polymère peut être par exemple du polyéthylène téréphtalate (PET) et peut être détaché après fixation du composant au document D.

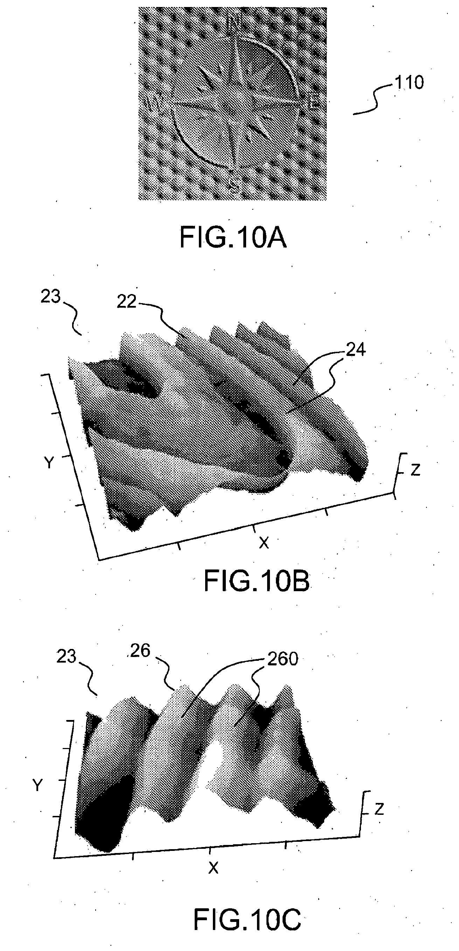

Les figures 10A à 10C illustrent par un exemple respectivement une vue d'un composant 110 selon l'invention (figure 10A) et deux images (figures 10B, 10C) prises au microscope à force atomique (AFM) d'une vue partielle de la structure 23 formant ledit composant respectivement à deux résolutions différentes du microscope. La structure 23 comprend un premier motif 22 (bas relief) modulé par un second motif 26 (réseau périodique). L'objet dont on cherche à simuler le relief est dans cet exemple une rose des vents. Dans cet exemple, le bas relief 22 de la structure 23, visible sur la figure 10B, comprend un ensemble de facettes 24 dont les formes ont été calculées pour simuler lé relief de l'objet formé de la rose des vents. Dans cet exemple, on observe sur la figure 10B que les facettes sont obtenues à niveau constant sous la forme d'un tranchage (comme cela est décrit par exemple au vu des figures 6A, 6B), le pas entre les facettes étant variable. La figure 10B montre ainsi la partie du bas relief simulant l'une des pointes de la rose des vents sur une surface d'environ 60 x 60 µm. Le premier motif 22 est modulé par le second motif 26 formé d'éléments diffractifs 260 agencés périodiquement, visibles sur la figure 10C obtenue à plus forte résolution. La figure 10C représente ainsi une image d'une partie de la structure visible sur la figure 10B mais agrandie pour percevoir les lignes formant le réseau de diffraction. Typiquement, La figure 10C montre ainsi une partie de la structure dont la surface est d'environ 1,5 x 1,5 µm. Cet exemple de réalisation illustre ainsi la structure régulière du deuxième motif et celle au contraire irrégulière du bas relief (premier motif) calculé pour simuler l'image en relief d'un objet en relief.

La figure 10 représente une vue simulée du composant réalisé après encapsulation de la structure 23, comme décrit précédemment. Sur cette figure, les effets de couleur résultant du second motif et normalement visibles ne sont pas apparents ; par contre l'effet de relief résultant du premier motif de la structure est montré.

Le composant optique selon l'invention ainsi obtenu est un composant visible en réflexion qui procure un niveau de sécurité très élevé. Il est en effet facilement contrôlable à vue tout en étant extrêmement difficile à falsifier du fait de la technicité du procédé de fabrication mise en oeuvre.

Par ailleurs, Un tel composant optique est compatible au niveau de son procédé de fabrication avec d'autres effets visuels standard utilisés dans les composants de sécurité.

Bien que décrite à travers un certain nombre d'exemples de réalisation, le composant optique et le procédé de fabrication selon l'invention comprend différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique d'authentification visible en réflexion comprenant :
- au moins une structure gravée (23) sur un support (20) d'indice n₀,
- une couche mince (60) d'un matériau diélectrique d'indice optique n₁ différent de n₀ déposée sur ladite structure (23), la différence entre les indices étant supérieure à 0.5, la couche mince présentant une épaisseur comprise entre 50 nm et 150 nm,
- une couche (50) d'un matériau d'indice n₂ proche de n₀ encapsulant la structure (23) revêtue de la couche mince (60),
ladite structure (23) présentant un premier motif (22) modulé par un second motif :
- le premier motif (22) étant un bas relief comprenant un ensemble de facettes (24) dont les formes sont déterminées pour simuler une image en relief d'un objet en relief (10),
- le second motif (26) étant un réseau périodique suivant une dimension, de pas compris entre 250 nm et 400 nm et de profondeur comprise entre 50 nm et 300 nm, déterminé pour moduler le premier motif (22) afin de produire, après dépôt de la couche mince (60) et encapsulation de ladite structure (23), une première couleur selon une première orientation d'observation et une deuxième couleur différente selon une deuxième orientation d'observation obtenue par une rotation azimutale de 90° du composant.

2. Composant optique selon la revendication 1, **caractérisé en ce que** ledit premier motif (22) est calculé pour former lors de l'observation du composant pour le contrôle d'authenticité un signe graphique reconnaissable.

3. Composant optique selon l'une des revendications précédentes, **caractérisé en ce que** la couche est formée d'un matériau haut indice, la différence d'indice Δn entre les indices n₁ et n₀ étant supérieure à environ 0,5.

4. Composant optique selon l'une des revendications précédentes, **caractérisé en ce que** le matériau d'indice n₁ comprend au moins l'un des matériaux du groupe consistant en : sulfure de zinc, dioxyde de titane.

5. Composant optique selon l'une des revendications précédentes, **caractérisé en ce qu'**une profondeur du premier motif (22) est comprise entre 0.5 et 7 microns.

6. Composant optique selon l'une des revendications précédentes, **caractérisé en ce que** les facettes comprennent des lignes supérieures formant une alternance de lignes de crêtes, l'écart minimum entre plus de 90% des paires de lignes de crêtes adjacentes du premier motif (22) étant au moins deux fois supérieur au pas du second motif (26).

7. Composant optique selon l'une des revendications précédentes, **caractérisé en ce que** le support (20) et le matériau formant la couche mince (60) sont transparents.

8. Composant optique selon l'une des revendications précédentes, comprenant en outre :
- une couche de polymère (70) déposée sur le support,
- une couche opaque (80) déposée sur la couche d'encapsulation (50),
- une couche de colle (90) déposée sur la couche opaque pour adhérer à la surface d'un document.

9. Composant optique selon l'une des revendications précédentes, dans lequel une section du premier motif présente des surfaces à deux ou plusieurs niveaux.

10. Procédé de fabrication d'un composant optique d'authentification comprenant la formation d'au moins une structure gravée (23) sur un support (20) d'indice n₀, ladite structure présentant un premier motif (22) modulé par un second motif (26),
- le premier motif (22) étant un bas relief comprenant un ensemble de facettes (24) dont les formes sont déterminées pour simuler une image en relief d'un objet en relief (10),
- le second motif (26) étant un réseau périodique suivant une dimension, de pas compris entre 250 nm et 400 nm et de profondeur comprise entre 50 nm et 300 nm, déterminé pour moduler le premier motif (22) afin de produire, après dépôt d'une couche mince (60) et encapsulation de ladite structure (23), une première couleur selon une première orientation d'observation et une deuxième couleur différente selon une deuxième orientation d'observation obtenue par une rotation azimutale de 90° du composant,
le procédé comprenant en outre :
- une étape de dépôt de la couche mince (60) d'un matériau diélectrique d'un premier indice n₁ de réfraction différent de n₀ sur ladite structure (23), la différence entre les indices étant supérieure à 0.5, la couche mince présentant une épaisseur comprise entre 50 nm et 150 nm, et
- une étape d'encapsulation consistant à enduire la structure (23) revêtue de ladite couche mince (60) d'une couche (50) d'un matériau d'un second indice n2 proche de n0.

11. Procédé de fabrication selon la revendication 10 dans lequel le premier motif est calculé à partir d'une image dudit objet (10) codant le relief sur plusieurs niveaux de gris.

12. Procédé de fabrication selon l'une des revendications 10 ou 11, dans lequel la formation de la structure gravée (23) sur le support (20) comprend la réalisation d'un master optique comprenant :
- une première insolation d'une résine photosensible adaptée pour former après développement le premier motif (22) sur ladite résine,
- une deuxième insolation de la résine adaptée pour former après développement le deuxième motif (26) sur ladite résine,
- le développement de la résine en utilisant une solution chimique déterminée.

## Patentansprüche

1. Optische Komponente zur Authentifizierung, die in Reflexion sichtbar ist und Folgendes umfasst:
- wenigstens eine Struktur (23), die auf einem Träger (20) mit dem Index n₀ geätzt ist,
- eine dünne Schicht (60) aus einem dielektrischen Material mit dem optischen Index n₁, der von n₀ verschieden ist, die auf die Struktur (23) aufgebracht ist, wobei die Differenz zwischen den Indices größer als 0,5 ist und die dünne Schicht zwischen 50 und 150 nm dick ist,
- eine Schicht (50) aus einem Material mit einem Index n₂ nahe dem Index n₀, welche die mit der dünnen Schicht (60) beschichtete Struktur (23) kapselt,
wobei die Struktur (23) ein erstes Muster (22) aufweist, das durch ein zweites Muster moduliert ist:
- wobei das erste Muster (22) ein Flachrelief ist, das eine Anordnung von Facetten (24) umfasst, deren Formen bestimmt sind, um ein Reliefbild eines Reliefobjekts (10) zu simulieren,
- wobei das zweite Muster (26) ein periodisches Gitter entlang einer Dimension ist, mit einer Schrittweite zwischen 250 nm und 400 nm und einer Tiefe zwischen 50 nm und 300 nm, das bestimmt ist, um das erste Muster (22) zu modulieren, um nach Aufbringung der dünnen Schicht (60) und Kapselung der Struktur (23) eine erste Farbe gemäß einer ersten Betrachtungsorientierung und eine zweite andere Farbe gemäß einer zweiten Betrachtungsorientierung, die durch eine 90° azimutale Drehung der Komponente erhalten wird, zu erzeugen.

2. Optische Komponente nach Anspruch 1, **dadurch gekennzeichnet, dass** das erste Muster (22) berechnet wird, um bei der Betrachtung der Komponente für die Authentizitätskontrolle ein wiedererkennbares graphisches Zeichen zu bilden.

3. Optische Komponente nach einem der vorhergehenden Ansprüche, **dadurch gekennzeichnet, dass** die Schicht aus einem Material mit hohem Index gebildet ist, wobei die Differenz Δn zwischen den Indices n₁ und n₀ größer als etwa 0,5 ist.

4. Optische Komponente nach einem der vorhergehenden Ansprüche, **dadurch gekennzeichnet, dass** das Material mit dem Index n₁ wenigstens eines der Materialien der Gruppe enthält, die aus Zinksulfid, Titandioxid besteht.

5. Optische Komponente nach einem der vorhergehenden Ansprüche, **dadurch gekennzeichnet, dass** eine Tiefe des ersten Musters (22) zwischen 0,5 und 7 Mikrometer.

6. Optische Komponente nach einem der vorhergehenden Ansprüche, **dadurch gekennzeichnet, dass** die Facetten obere Linien umfassen, die eine Wechselfolge von Scheitellinien bilden, wobei der Mindestabstand zwischen mehr als 90 % der Scheitellinienpaare, die dem ersten Muster (22) benachbart sind, wenigstens zwei Mal so groß wie die Schrittweite des zweiten Musters (26) ist.

7. Optische Komponente nach einem der vorhergehenden Ansprüche, **dadurch gekennzeichnet, dass** der Träger (20) und das Material, das die dünne Schicht (60) bildet, transparent sind.

8. Optische Komponente nach einem der vorhergehenden Ansprüche, umfassend ferner:
- eine Polymerschicht (70), die auf dem Träger aufgebracht ist,
- eine undurchsichtige Schicht (80), die auf der Kapselungsschicht (50) aufgebracht ist,
- eine Klebstoffschicht (90), die auf der undurchsichtigen Schicht aufgebracht ist, um auf der Oberfläche eines Dokuments zu haften.

9. Optische Komponente nach einem der vorhergehenden Ansprüche, wobei ein Abschnitt des ersten Musters Oberflächen mit zwei oder mehreren Ebenen aufweist.

10. Verfahren zum Herstellen einer optischen Komponente zur Authentifizierung, das die Bildung wenigstens einer Struktur (23) umfasst, die auf einen Träger (20) mit dem Index n₀ geätzt ist, wobei die Struktur ein erstes Muster (22) aufweist, das durch ein zweites Muster (26) moduliert ist,
- wobei das erste Muster (22) ein Flachrelief ist, das eine Anordnung von Facetten (24) umfasst, deren Formen bestimmt sind, um ein Reliefbild eines Reliefobjekts (10) zu simulieren,
- wobei das zweite Muster (26) ein periodisches Gitter entlang einer Dimension ist, mit einer Schrittweite zwischen 250 nm und 400 nm und einer Tiefe zwischen 50 nm und 300 nm, das bestimmt ist, um das erste Muster (22) zu modulieren, um nach Aufbringung einer dünnen Schicht (60) und Kapselung der Struktur (23) eine erste Farbe gemäß einer ersten Betrachtungsorientierung und eine zweite andere Farbe gemäß einer zweiten Betrachtungsorientierung, die durch eine 90° azimutale Drehung der Komponente erhalten wird, zu erzeugen,
wobei das Verfahren ferner Folgendes umfasst:
- einen Schritt der Aufbringung der dünnen Schicht (60) aus einem dielektrischen Material mit einem ersten Brechungsindex n₁, der von n₀ verschieden ist, auf die Struktur (23), wobei die Differenz zwischen den Indices größer als 0,5 ist und die dünne Schicht zwischen 50 und 150 nm dick ist, und
- einen Schritt der Kapselung, der darin besteht, auf die mit der dünnen Schicht (60) beschichteten Struktur (23) eine Schicht (50) aus einem Material mit einem zweiten Index n₂ nahe n₀ aufzubringen.

11. Herstellungsverfahren nach Anspruch 10, wobei das erste Muster ausgehend von einem Bild des Objekts (10) berechnet wird, welches das Relief in mehrere Graupegel codiert.

12. Herstellungsverfahren nach einem der Ansprüche 10 oder 11, wobei die Bildung der geätzten Struktur (23) auf dem Träger (20) die Realisierung eines optischen Masters umfasst, umfassend:
- eine erste Belichtung eines lichtempfindlichen Harzes, die nach Entwicklung zur Bildung des ersten Musters (22) auf dem Harz geeignet ist,
- eine zweite Belichtung des lichtempfindlichen Harzes, die nach Entwicklung zur Bildung des zweiten Musters (26) auf dem Harz geeignet ist,
- die Entwicklung des Harzes durch Verwendung einer bestimmten chemischen Lösung.

## Claims

1. An optical authentication component visible in reflection, comprising:
- at least one structure (23) imprinted on a substrate (20) of index n₀;
- a thin layer (60), made of a dielectric material having a refractive index n₁ different to n₀, deposited on said structure (23), the difference between indexes being greater than 0,5, the thin layer being between 50 and 150 nm in thickness;
- a layer (50), made of a material having an index n₂ close to n₀, encapsulating the structure (23) coated with the thin layer (60),
said structure (23) comprising a first pattern (22) modulated by a second pattern:
- the first pattern (22) being a bas-relief comprising an array of facets (24) the shapes of which are defined in order to simulate an image in relief of an object (10) in relief;
- the second pattern (26) being a one-dimensional periodic grating, having a pitch between 200 and 500 nanometers and a depth between 50 and 300 nanometers, defined in order to modulate the first pattern (22) in order to produce, after the thin layer (60) has been deposited and said structure (23) has been encapsulated, a first color at a first viewing angle and a different second color at a second viewing angle obtained by azimuthal rotation of 90° of the component.

2. The optical component as claimed in claim 1, **characterized in that** said first pattern (22) is calculated to form a recognizable graphic sign when the component is observed in order to check authenticity.

3. The optical component according to one of the preceding claims, **characterized in that** the layer is formed of a high-index material, the index difference Δn between the indexes n₁ and n₀ being greater than about 0.5.

4. The optical component according to one of the preceding claims, **characterized in that** the material of index n₁ comprises at least one material from the group consisting of: zinc sulfide and titanium dioxide.

5. The optical component according to one of the preceding claims, **characterized in that** a depth of the first pattern (22) is between 0.5 and 7 microns.

6. The optical component according to one of the preceding claims, **characterized in that** the facets comprise superior lines forming an alternating of ridges, the minimum separation between more than 90% of the pairs of adjacent ridges of the first pattern (22) is at least two times larger than the pitch of the second pattern (26).

7. The optical component according to one of the preceding claims, **characterized in that** the substrate (20) and the material forming the thin layer (60) are transparent.

8. The optical component according to one of the preceding claims, furthermore comprising:
- a polymer layer (70) deposited on the substrate;
- an opaque layer (80) deposited on the encapsulating layer (50); and
- an adhesive layer (90) deposited on the opaque layer for adhering to the surface of a document.

9. The optical component according to one of the preceding claims, in which a section of the first pattern has areas with two or more levels.

10. A method for manufacturing an optical authentication component comprising forming at least one structure (23) imprinted on a substrate (20) of index n₀, said structure comprising a first pattern (22) modulated by a second pattern (26),
- the first pattern (22) being a bas-relief comprising an array of facets (24) the shapes of which are defined in order to simulate an image in relief of an object (10) in relief;
- the second pattern (26) being a two-dimensional periodic grating, having a pitch between 200 and 500 nanometers and a depth between 50 and 300 nanometers, defined in order to modulate the first pattern (22) in order to produce, after a thin layer (60) has been deposited and said structure (23) has been encapsulated, a first color at a first viewing angle and a different second color at a second viewing angle obtained by azimuthal rotation of 90° of the component,
the method furthermore comprising:
- a step of depositing the thin layer (60) of a dielectric material having a first refractive index n₁ different to n₀ on said structure (23), the difference between indexes being greater than 0,5, the thin layer being between 50 and 150 nm in thickness; and
- an encapsulation step consisting in coating the structure (23) covered with said thin layer (60) with a layer (50) of a material having a second index n₂ close to n₀.

11. The manufacturing method according to claim 10, in which the first pattern is calculated using an image of said object (10) to encode the relief onto several gray levels.

12. The manufacturing method according to one of claims 10 and 11, in which forming the structure (23) imprinted on the substrate (20) includes producing an optical master, comprising:
- a first insolation of a photoresist adapted to form, after development, the first pattern (22) in said resist;
- a second insolation of the resist adapted to form, after development, the second pattern (26) in said resist; and
- development of the resist using a given chemical solution.
